# EUROPEAN PATENT APPLICATION

(11) **EP 4 809 824 A1**
(43) Date of publication of application: **23.09.2026**
(21) Application number: 25164937.2
(22) Date of filing: 20.03.2025
(51) Int. Cl.: A01K 61/80

(54) **A FISH FEEDER AND A FISH FEEDING SYSTEM**

(71) Applicant: DemeterX, SIA, 1029 Riga (LV)
(72) Inventor: Krasnoborodko, Vasilii, LV-1082 Riga (LV)
(74) Representative: Fortuna, Jevgenijs

(57) **Abstract**

A fish feeder (1) and fish feeding system are disclosed, providing precise and controlled feed dispensing while minimizing clogging and feed accumulation. The feeder housing (2) forms the feed container (4) and the feed channel (8) as internally separated sections, with the feed channel extending below the feed container and accommodating a feeding screw (9). A feed container outlet (5) is positioned at the interface between the feed container and the feed channel, allowing controlled feed transfer into the feed channel, with feed flow being regulated by a feed flow control gate (6). The feeding screw includes blades (92) with specially profiled upper portions and an inclined base surface, which collectively ensure continuous downward and outward radial movement of feed granules, preventing feed accumulation and ensuring uniform distribution. The system includes a controller (30) operatively connected to a set of sensors, (20) the feed flow control gate actuation mechanism, and the feeding screw actuation mechanism. The controller processes sensor data, calculates feeding parameters, and generates control signals to adjust the feed flow control gate and feeding screw operation, optimizing feed distribution, reducing waste, and ensuring reliable and adaptive feeding control in aquaculture applications.

## Description

### Field Of The Invention

The invention relates to a fish feeder and a fish feeding system designed for controlled and automated dispensing of fish feed.

### Background Of The Invention

Fish farming, also known as aquaculture, is a critical industry that supplies a significant portion of the world's seafood consumption. Efficient and controlled fish feeding is essential for optimizing fish growth, minimizing feed waste, and maintaining water quality. The ability to deliver the correct amount of feed in a consistent and controlled manner is a key factor in ensuring the productivity and sustainability of fish farming operations.

Traditional fish feeding systems often rely on gravity-fed mechanisms or manually adjusted dispensers. While these methods are simple, they frequently lead to inconsistent feed distribution, as feed may flow uncontrollably due to variations in particle size, humidity, or mechanical wear. This inconsistency can result in overfeeding, underfeeding, or feed accumulation in unintended areas, all of which negatively impact fish growth rates and increase operational costs.

To improve feeding efficiency, mechanized feeders have been introduced, incorporating screw-based or auger-driven systems to transport feed granules toward an outlet. While such systems offer more controlled feeding compared to gravity-based designs, they still suffer from feed flow irregularities, clogging, and mechanical inefficiencies. Feed particles may become trapped in gaps within the system, leading to blockages that disrupt feeding operations and require frequent maintenance.

Another challenge in existing feeding systems is the lack of precise regulation over feed entry and transport mechanisms. In many feeders, the flow of feed from the storage container to the transport mechanism is either completely open or closed, providing limited adjustability. This can cause either excessive feed release when the system is activated or inconsistent feeding rates over time. Furthermore, the interaction between the feed transport mechanism and the feeder outlet is often poorly optimized, leading to irregular feed discharge patterns and accumulation at undesired locations.

There is known a fish tank device incorporating an automatic feeder [1] that dispenses feed using a servo motor and a rotary screw mechanism. The system includes a PLC controller and a timer, which regulate the operation of the rotary screw and sliding plate to dispense feed at preset intervals. When the preset feeding time is reached, the PLC controller activates the servo motor, which in turn rotates the rotary screw to drive a slider and sliding plate, allowing feed to exit through a gap. Once the designated feeding time expires, the system reverses the motor direction, moving the sliding plate back into position to close the gap, thereby stopping feed dispensing.

There is also known an automatic fish feeder [2] incorporated into an intelligent aquarium system. The feeder is part of a broader aquarium control system that regulates feeding based on sensor inputs, including water temperature, salinity, dissolved oxygen levels, and fish health indicators. Feeding is managed by a decision feedback unit that determines when and how much feed should be dispensed. The system also includes a micro-titration pump, which dispenses precise amounts of feed or feed additives based on the control system's calculations. The feeder is activated according to preset parameters, and feeding adjustments are made based on water quality conditions rather than direct control of feed flow mechanisms.

An analysis of prior art solutions reveals a need for a fish feeder that provides precise and adjustable control over feed flow, minimizes clogging and feed accumulation, and ensures reliable transport of feed granules toward the outlet. A system that effectively integrates feed storage, flow regulation, and transport mechanisms would enhance feeding consistency, reduce waste, and improve long-term operational reliability.

### Brief Summary Of The Invention

The goal of the invention is to overcome the drawbacks of the prior art and provide a fish feeder that ensures precise and controlled feed dispensing, consistent and reliable feed transport toward the feeder outlet, reducing feed accumulation and mechanical inefficiencies as well as to enable adjustable feed flow regulation, optimize feed distribution, and enhance overall feeding efficiency and system durability.

The goal is achieved by a fish feeder comprising a feeder housing that forms the feed container and the feed channel as internally separated sections, wherein the feed channel extends below the feed container and accommodates a feeding screw. A feed container outlet is positioned at the interface between the feed container and the feed channel, allowing controlled feed transfer into the feed channel, with feed flow being regulated by a feed flow control gate. The feed flow control gate, positioned at the feed container outlet, is movably adjustable to regulate the amount of feed entering the feed channel, preventing uncontrolled surges or blockages. The feed flow control gate actuation mechanism enables precise adjustment of feed flow. The internal surface of the feed channel is shaped to conform to the feeding screw, providing a sufficient clearance that prevents feed accumulation and mechanical inefficiencies. The feeding screw includes blades with specially profiled upper portions and an inclined base surface, which collectively ensure continuous downward and outward radial movement of feed granules, preventing feed accumulation and ensuring uniform distribution. The feeding screw actuation mechanism drives the feeding screw, ensuring controlled transport of feed granules toward the fish feeder outlet, where the transported feed is discharged.

The goal is further achieved by a fish feeding system comprising the fish feeder and a set of sensors configured to measure parameters relevant to fish feeding. The system includes a controller operatively connected to the sensors, the feed flow control gate actuation mechanism, and the feeding screw actuation mechanism. The controller comprises a processing unit with stored instructions that, when executed, cause it to receive data from the sensors, calculate feeding parameters, and generate control signals for adjusting the feed flow control gate and actuating the feeding screw. This enables automated regulation of feed dispensing based on real-time feeding conditions, optimizing feeding efficiency and reducing waste.

In an embodiment, the feeding parameters calculated by the controller include the actuation time of the feed flow control gate actuation mechanism and the feeding screw actuation mechanism, ensuring precise control over the duration of feed release. Additionally, the feeding parameters may further include the rotational speed of the feeding screw, allowing for dynamic adjustments to match feeding requirements. This ensures that the amount of feed transported and discharged is precisely regulated to meet the calculated ration.

In a further embodiment, the set of sensors comprises a temperature sensor configured to measure the ambient water temperature in which the fish feeder is located and a fish measurement sensor configured to estimate the individual weight of fish based on biometric data, size measurements, or volumetric analysis. The controller receives data from these sensors and calculates the required feed ration based on water temperature, estimated fish weight, and empirically determined coefficients. The controller then generates control signals to adjust the feed flow control gate and feeding screw operation accordingly, ensuring that feed distribution aligns with the specific metabolic needs of the fish.

### Brief Description Of The Drawings

Fig. 1 shows a schematical perspective view of the proposed fish feeder;
Fig. 2 - is a cross-sectional view from the top of the proposed fish feeder;
Fig. 3 - is a side view of the feeding screw;
Fig. 4 - is a schematical perspective view of the proposed fish feeding system in operation.

### Detailed Description Of The Invention

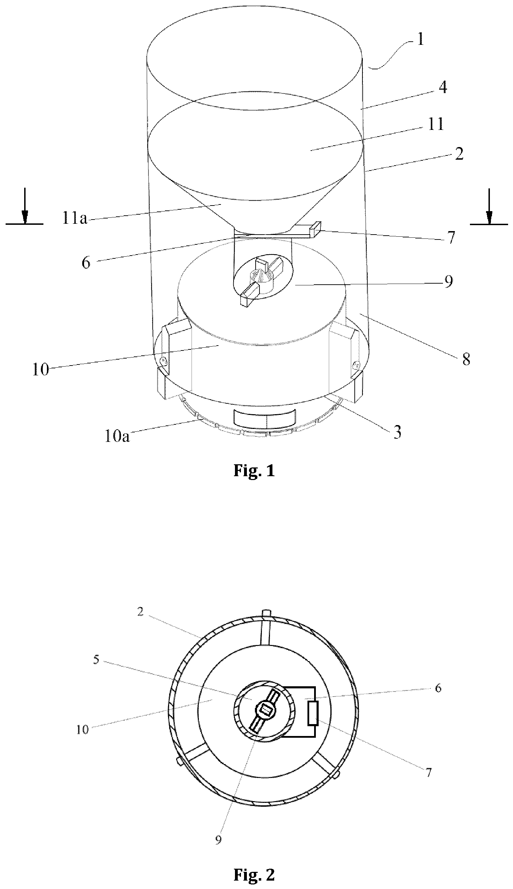

The claimed fish feeder 1 comprises: a feeder housing 2, having a fish feeder outlet 3; a feed container 4, having a feed container outlet 5; a feed flow control gate 6; a feed flow control gate actuation mechanism 7; a feed channel 8; a feeding screw 9; and a feeding screw actuation mechanism 10 (Fig. 1-2).

The feeder housing 2 forms the feed container 4 and the feed channel 8 as internally separated sections. The feed container 4 defining a storage volume for feed granules, upstream of the feeding screw 9. The feed channel 8 extends below the feed container 4, accommodating the feeding screw 9. The feed channel 8 has an internal surface shaped to conform to the feeding screw 9 with a sufficient clearance that allows rotational movement of the feeding screw 9. The fish feeder outlet 3 is positioned at a lower section of the feeder housing 2 and configured to discharge the transported feed granules.

According to one embodiment, the feeder housing 2 is made of a transparent material, allowing for easy visual monitoring of feed levels and flow. According to another particular embodiment, the feeder housing 2 is formed as a transparent cylindrical body. The feeder housing 2 is fixedly attached to the feeding screw actuation mechanism housing 10a, ensuring structural stability and alignment.

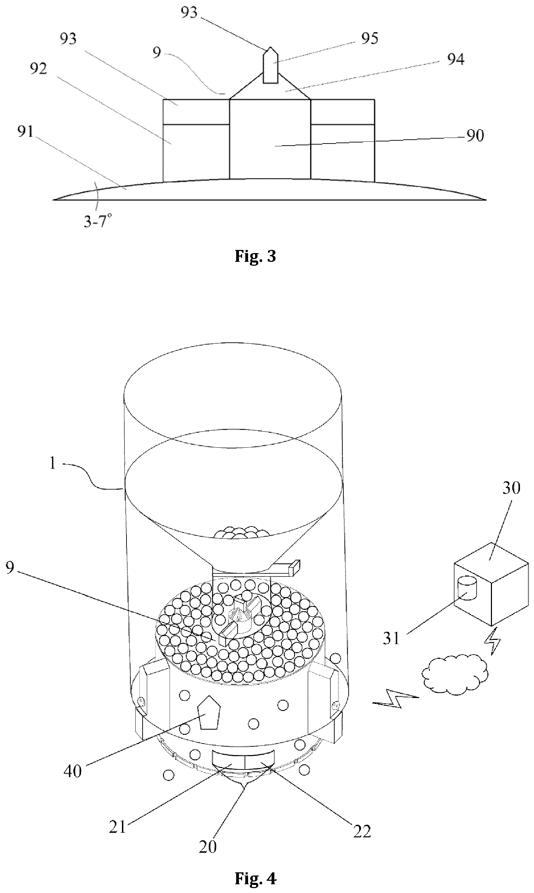

The feeding screw 9 having a feed transport structure configured to convey feed granules through the feed channel 8 when rotated. The feeding screw 9 is rotatably mounted about a vertical central axis and comprises a cylindrical central body 90 positioned atop a base part 91. The base part 91 has an inclined or curved upper surface gradually descending towards its periphery at an inclination angle between 3° and 7°, facilitating outward radial movement of feed particles (Fig. 3). The cylindrical central body 90 supports at least two side substantially rectangular blades 92, each provided at their upper ends with top portions 93 exhibiting single-sloped or double-sloped profiles. This specific shaping of the top portions 93 prevents feed particles from remaining atop the blades 92, ensuring continuous downward displacement of feed particles. Mounted directly above the cylindrical central body 90 is a conically shaped intermediate portion 94, atop which a further projecting top blade 95 is located. The top blade 95 (as side blades 92) serves to agitate bulk feed material, facilitate even distribution of feed, and enhancing its downward flow toward the inclined base part 91. The top blade 95 is also preferably provided with top portion 93 exhibiting single-sloped or double-sloped profiles. The side blades 92 preferably extend radially outward from the cylindrical central body 90 toward, but not reaching, the periphery of the inclined base part 91. According to the preferred embodiment, the side blades 92 extend approximately halfway to two-thirds from the cylindrical central body 90 toward the peripheral edge of the base part 91. The feeding screw 9 is arranged without gaps relative to the feeding screw actuation mechanism 10 and its casing, effectively eliminating spaces where feed particles could accumulate and cause blockage. Additionally, the radial clearance between the feeding screw 9 and the inner wall of the feeder housing 2 is maintained greater than the maximum dimension of the largest feed particles used, ensuring unobstructed feed passage and preventing jamming. According to another embodiment, an upper feed sub-channel 8a is arranged below the feed container outlet 5 and is selectively closable from the feed container outlet 5 by the feed flow control gate 6 (Fig. 4). The cylindrical central body 90 and side blades 92 of the feeding screw 9 are partially accommodated within the upper feed sub-channel 8a, enabling their rotation therein. The term 'partially accommodated' as used herein indicates that only a portion of the cylindrical central body 90 and side blades 92 extends vertically into the upper feed sub-channel 8a, with the remaining portion extending below the upper boundary of the sub-channel 8a. Rotation of the cylindrical central body 90 with the projecting top blade 95 and the side blades 92, partially accommodated within the upper feed sub-channel 8a, ensures effective agitation and prevents compaction of feed particles, causing the feed to move radially outward toward the peripheral region of the feeding screw 9.

The feed container outlet 5 is positioned at the interface 11 between the feed container 4 and the feed channel 8, allowing controlled feed transfer into the feed channel 8, with feed flow being regulated by the feed flow control gate 6.

The feed flow control gate 6, positioned at the feed container outlet 5, being movably adjustable to selectively regulate the amount of feed entering the feed channel 8. According to the preferred embodiment, the feed flow control gate 6 is a sliding gate, configured to move in a linear direction to regulate the amount of feed entering the feed channel 8.

The feed flow control gate actuation mechanism 7 is operatively coupled to the feed flow control gate 6 and configured to adjust the feed flow control gate 6 position to regulate feed flow.

The feeding screw actuation mechanism 10, operatively coupled to the feeding screw 9 and is configured to rotate the feeding screw 9 to transport feed through the feed channel 8 toward the fish feeder outlet 3.

The fish feeder outlet 3 may be implemented as a series of openings distributed around the feeding screw actuation mechanism housing 10a, allowing feed granules to be discharged efficiently. For instance, the fish feeder outlet 3 may be formed by the lower open end of the feeder housing 2, which is a cylindrical structure without a bottom, where the feed exits through the open section not covered by the feeding screw actuation mechanism 10. In this configuration, the feeding screw actuation mechanism 10 is centrally positioned within the cylindrical feeder housing 2, with its dimensions determining the extent of the unobstructed outlet area. This arrangement ensures that feed granules transported by the feeding screw 9 are discharged evenly around the periphery of the feeder housing 2, facilitating consistent feed dispersal into the surrounding environment.

According to yet another embodiment, the interface 11 between the feed container 4 and the feed channel 8 comprises a conical transition portion 11a, tapering downward to direct feed granules toward the feed container outlet 5, ensuring a controlled and uniform flow into the feed channel 8. The internal surfaces of the interface 11 may include guiding features or coatings to prevent feed accumulation and ensure consistent transfer. In other configurations, the interface 11 may include stepped or curved transitions to accommodate different feed particle sizes and flow characteristics.

The claimed fish feeding system (Fig. 4) comprises the disclosed fish feeder; a set of sensors 20, configured to measure parameters relevant to fish feeding; a controller 30, operatively connected to the set of sensors 20, the feed flow control gate actuation mechanism 7, and the feeding screw actuation mechanism 10. The controller 30 comprises a processing unit 31 with stored instructions, wherein the instructions, when executed, cause the controller 30 to: receive data from the set of sensors 20; calculate feeding parameters; and generate a control signal for the actuation of the feeding screw actuation mechanism 10 and the feed flow control gate actuation mechanism 7 to operate the feeding screw 9 and the feed flow control gate 6 in accordance with the calculated feeding parameters.

The controller 30 can be housed internally in the feeder (1), or externally. In an embodiment, the controller 30 is housed externally, separate from the fish feeder 1. This setup allows for centralized control of multiple feeders, remote operation, and better protection against environmental factors such as moisture, feed dust, and mechanical wear. In this embodiment the fish feeder 1 comprises a communication interface 40 configured to enable data exchange between the controller 30 and the set of sensors 20, the feed flow control gate actuation mechanism 7, and the feeding screw actuation mechanism 10.

The communication interface 40 may be implemented as a wireless communication module, incorporating a transmitter and receiver for data transmission using wireless protocols, depending on operational requirements. Alternatively, the communication interface 40 may be a wired connection, utilizing RS-485, Ethernet, or a CAN bus, ensuring stable and interference-resistant communication, particularly in industrial aquaculture environments. The selection of the communication interface 40 may depend on factors such as the number of fish feeders in the system, the distance between the controller 30 and the feeders 1, and environmental conditions.

The feeding parameters according to the invention may include the actuation time of the feeding screw actuation mechanism 10 and the feed flow control gate actuation mechanism 7 to operate the feeding screw 9 and the feed flow control gate 6. The feeding parameters may further include the rotational speed of the feeding screw 9.

According to an embodiment, the set of sensors 20 comprises a temperature sensor 21, configured to measure the ambient water temperature in which the fish feeder 1 is located; and a fish measurement sensor 22, configured to estimate the individual weight of fish based on biometric data, size measurements, or volumetric analysis. In this embodiment, the instructions stored with the processing unit 31, when executed, cause the controller 30 to: receive data from the temperature sensor 21 and the fish measurement sensor 22; calculate the feeding parameters, including the required feed ration based on water temperature, estimated individual fish weight, and empirically determined coefficients; and generate the control signal for the actuation of the feeding screw actuation mechanism 10 and the feed flow control gate actuation mechanism 7 to operate the feeding screw 9 and the feed flow control gate 6 in accordance with the calculated feeding parameters.

The fish measurement sensor 22 can be selected from a group consisting of optical sensors, acoustic sensors, pressure sensors, or volumetric measurement sensors, configured to estimate the individual weight of fish based on biometric data, size measurements, or volumetric analysis.

According to yet another embodiment, the instructions stored with the processing unit 31, when executed, cause the controller 30 to calculate the required feed ration (F) using the formula: *F=a×W^{b}×T^{c},* where: F is the daily feed ration, expressed in a unit of mass per fish per unit of time; *W* is the estimated individual fish weight, expressed in a unit of mass, determined based on data from the fish measurement sensor 22; T is the ambient water temperature, measured by the temperature sensor 21; a, b, and c are coefficients stored in a feeding table, the feeding table being accessible by the controller 30 and containing empirically determined values set forth in the Table 1.

**Table 1. Feeding ration (F) as a function of fish weight (W) and water temperature (T)**

| Weight (g) | T 6 °C | T 8 °C | T 10 °C | T 12 °C | T 14 °C | T 16 °C | T 18 °C |
|---|---|---|---|---|---|---|---|
| 50 | 0,70 | 0,85 | 1,03 | 1,25 | 1,51 | 1,82 | 1,48 |
| 75 | 0,65 | 0,79 | 0,95 | 1,15 | 1,39 | 1,68 | 1,36 |
| 100 | 0,61 | 0,74 | 0,90 | 1,08 | 1,31 | 1,58 | 1,28 |
| 125 | 0,59 | 0,71 | 0,86 | 1,04 | 1,25 | 1,52 | 1,23 |
| 150 | 0,57 | 0,68 | 0,83 | 1,00 | 1,21 | 1,46 | 1,18 |
| 175 | 0,55 | 0,66 | 0,80 | 0,97 | 1,17 | 1,42 | 1,15 |
| 200 | 0,53 | 0,65 | 0,78 | 0,94 | 1,14 | 1,38 | 1,12 |
| 225 | 0,52 | 0,63 | 0,76 | 0,92 | 1,11 | 1,35 | 1,09 |
| 250 | 0,51 | 0,62 | 0,75 | 0,90 | 1,09 | 1,32 | 1,07 |
| 275 | 0,50 | 0,61 | 0,73 | 0,89 | 1,07 | 1,29 | 1,05 |
| 300 | 0,49 | 0,59 | 0,72 | 0,87 | 1,05 | 1,27 | 1,03 |
| 325 | 0,48 | 0,59 | 0,71 | 0,86 | 1,04 | 1,25 | 1,01 |
| 350 | 0,48 | 0,58 | 0,70 | 0,84 | 1,02 | 1,23 | 1,00 |
| 375 | 0,47 | 0,57 | 0,69 | 0,83 | 1,01 | 1,22 | 0,99 |
| 400 | 0,46 | 0,56 | 0,68 | 0,82 | 0,99 | 1,20 | 0,97 |
| 425 | 0,46 | 0,55 | 0,67 | 0,81 | 0,98 | 1,19 | 0,96 |
| 450 | 0,45 | 0,55 | 0,66 | 0,80 | 0,97 | 1,17 | 0,95 |
| 475 | 0,45 | 0,54 | 0,66 | 0,79 | 0,96 | 1,16 | 0,94 |
| 500 | 0,44 | 0,54 | 0,65 | 0,79 | 0,95 | 1,15 | 0,93 |
| 525 | 0,44 | 0,53 | 0,64 | 0,78 | 0,94 | 1,14 | 0,92 |
| 550 | 0,44 | 0,53 | 0,64 | 0,77 | 0,93 | 1,13 | 0,91 |
| 575 | 0,43 | 0,52 | 0,63 | 0,76 | 0,92 | 1,12 | 0,91 |
| 600 | 0,43 | 0,52 | 0,63 | 0,76 | 0,92 | 1,11 | 0,90 |
| 625 | 0,42 | 0,51 | 0,62 | 0,75 | 0,91 | 1,10 | 0,89 |
| 650 | 0,42 | 0,51 | 0,62 | 0,75 | 0,90 | 1,09 | 0,88 |
| 675 | 0,42 | 0,51 | 0,61 | 0,74 | 0,89 | 1,08 | 0,88 |
| 700 | 0,42 | 0,50 | 0,61 | 0,73 | 0,89 | 1,07 | 0,87 |
| 725 | 0,41 | 0,50 | 0,60 | 0,73 | 0,88 | 1,07 | 0,86 |
| 750 | 0,41 | 0,50 | 0,60 | 0,72 | 0,88 | 1,06 | 0,86 |
| 775 | 0,41 | 0,49 | 0,60 | 0,72 | 0,87 | 1,05 | 0,85 |
| 800 | 0,40 | 0,49 | 0,59 | 0,72 | 0,86 | 1,05 | 0,85 |
| 825 | 0,40 | 0,49 | 0,59 | 0,71 | 0,86 | 1,04 | 0,84 |
| 850 | 0,40 | 0,48 | 0,58 | 0,71 | 0,85 | 1,03 | 0,84 |
| 875 | 0,40 | 0,48 | 0,58 | 0,70 | 0,85 | 1,03 | 0,83 |
| 900 | 0,39 | 0,48 | 0,58 | 0,70 | 0,84 | 1,02 | 0,83 |
| 925 | 0,39 | 0,48 | 0,57 | 0,69 | 0,84 | 1,02 | 0,82 |
| 950 | 0,39 | 0,47 | 0,57 | 0,69 | 0,84 | 1,01 | 0,82 |
| 975 | 0,39 | 0,47 | 0,57 | 0,69 | 0,83 | 1,01 | 0,81 |
| 1000 | 0,39 | 0,47 | 0,57 | 0,68 | 0,83 | 1,00 | 0,81 |
| 1025 | 0,38 | 0,47 | 0,56 | 0,68 | 0,82 | 1,00 | 0,81 |
| 1050 | 0,38 | 0,46 | 0,56 | 0,68 | 0,82 | 0,99 | 0,80 |
| 1075 | 0,38 | 0,46 | 0,56 | 0,67 | 0,82 | 0,99 | 0,80 |
| 1100 | 0,38 | 0,46 | 0,55 | 0,67 | 0,81 | 0,98 | 0,80 |
| 1125 | 0,38 | 0,46 | 0,55 | 0,67 | 0,81 | 0,98 | 0,79 |
| 1150 | 0,38 | 0,45 | 0,55 | 0,67 | 0,80 | 0,97 | 0,79 |
| 1175 | 0,37 | 0,45 | 0,55 | 0,66 | 0,80 | 0,97 | 0,78 |
| 1200 | 0,37 | 0,45 | 0,55 | 0,66 | 0,80 | 0,96 | 0,78 |
| 1225 | 0,37 | 0,45 | 0,54 | 0,66 | 0,79 | 0,96 | 0,78 |
| 1250 | 0,37 | 0,45 | 0,54 | 0,65 | 0,79 | 0,96 | 0,78 |
| 1275 | 0,37 | 0,45 | 0,54 | 0,65 | 0,79 | 0,95 | 0,77 |
| 1300 | 0,37 | 0,44 | 0,54 | 0,65 | 0,78 | 0,95 | 0,77 |
| 1325 | 0,37 | 0,44 | 0,53 | 0,65 | 0,78 | 0,95 | 0,77 |
| 1350 | 0,36 | 0,44 | 0,53 | 0,64 | 0,78 | 0,94 | 0,76 |
| 1375 | 0,36 | 0,44 | 0,53 | 0,64 | 0,78 | 0,94 | 0,76 |
| 1400 | 0,36 | 0,44 | 0,53 | 0,64 | 0,77 | 0,93 | 0,76 |
| 1425 | 0,36 | 0,44 | 0,53 | 0,64 | 0,77 | 0,93 | 0,76 |
| 1450 | 0,36 | 0,43 | 0,53 | 0,63 | 0,77 | 0,93 | 0,75 |
| 1475 | 0,36 | 0,43 | 0,52 | 0,63 | 0,77 | 0,93 | 0,75 |
| 1500 | 0,36 | 0,43 | 0,52 | 0,63 | 0,76 | 0,92 | 0,75 |
| 1525 | 0,36 | 0,43 | 0,52 | 0,63 | 0,76 | 0,92 | 0,74 |
| 1550 | 0,35 | 0,43 | 0,52 | 0,63 | 0,76 | 0,92 | 0,74 |
| 1575 | 0,35 | 0,43 | 0,52 | 0,62 | 0,76 | 0,91 | 0,74 |
| 1600 | 0,35 | 0,43 | 0,51 | 0,62 | 0,75 | 0,91 | 0,74 |
| 1625 | 0,35 | 0,42 | 0,51 | 0,62 | 0,75 | 0,91 | 0,74 |
| 1650 | 0,35 | 0,42 | 0,51 | 0,62 | 0,75 | 0,90 | 0,73 |
| 1675 | 0,35 | 0,42 | 0,51 | 0,62 | 0,75 | 0,90 | 0,73 |
| 1700 | 0,35 | 0,42 | 0,51 | 0,62 | 0,74 | 0,90 | 0,73 |
| 1725 | 0,35 | 0,42 | 0,51 | 0,61 | 0,74 | 0,90 | 0,73 |
| 1750 | 0,35 | 0,42 | 0,51 | 0,61 | 0,74 | 0,89 | 0,72 |
| 1775 | 0,34 | 0,42 | 0,50 | 0,61 | 0,74 | 0,89 | 0,72 |
| 1800 | 0,34 | 0,42 | 0,50 | 0,61 | 0,74 | 0,89 | 0,72 |
| 1825 | 0,34 | 0,41 | 0,50 | 0,61 | 0,73 | 0,89 | 0,72 |
| 1850 | 0,34 | 0,41 | 0,50 | 0,60 | 0,73 | 0,88 | 0,72 |
| 1875 | 0,34 | 0,41 | 0,50 | 0,60 | 0,73 | 0,88 | 0,71 |
| 1900 | 0,34 | 0,41 | 0,50 | 0,60 | 0,73 | 0,88 | 0,71 |
| 1925 | 0,34 | 0,41 | 0,50 | 0,60 | 0,73 | 0,88 | 0,71 |
| 1950 | 0,34 | 0,41 | 0,49 | 0,60 | 0,72 | 0,87 | 0,71 |
| 1975 | 0,34 | 0,41 | 0,49 | 0,60 | 0,72 | 0,87 | 0,71 |
| 2000 | 0,34 | 0,41 | 0,49 | 0,60 | 0,72 | 0,87 | 0,71 |
| 2025 | 0,34 | 0,41 | 0,49 | 0,59 | 0,72 | 0,87 | 0,70 |
| 2050 | 0,34 | 0,41 | 0,49 | 0,59 | 0,72 | 0,87 | 0,70 |
| 2075 | 0,33 | 0,40 | 0,49 | 0,59 | 0,71 | 0,86 | 0,70 |
| 2100 | 0,33 | 0,40 | 0,49 | 0,59 | 0,71 | 0,86 | 0,70 |
| 2125 | 0,33 | 0,40 | 0,49 | 0,59 | 0,71 | 0,86 | 0,70 |
| 2150 | 0,33 | 0,40 | 0,49 | 0,59 | 0,71 | 0,86 | 0,70 |
| 2175 | 0,33 | 0,40 | 0,48 | 0,59 | 0,71 | 0,86 | 0,69 |
| 2200 | 0,33 | 0,40 | 0,48 | 0,58 | 0,71 | 0,85 | 0,69 |
| 2225 | 0,33 | 0,40 | 0,48 | 0,58 | 0,70 | 0,85 | 0,69 |
| 2250 | 0,33 | 0,40 | 0,48 | 0,58 | 0,70 | 0,85 | 0,69 |
| 2275 | 0,33 | 0,40 | 0,48 | 0,58 | 0,70 | 0,85 | 0,69 |
| 2300 | 0,33 | 0,40 | 0,48 | 0,58 | 0,70 | 0,85 | 0,69 |
| 2325 | 0,33 | 0,40 | 0,48 | 0,58 | 0,70 | 0,84 | 0,68 |
| 2350 | 0,33 | 0,39 | 0,48 | 0,58 | 0,70 | 0,84 | 0,68 |
| 2375 | 0,33 | 0,39 | 0,48 | 0,58 | 0,70 | 0,84 | 0,68 |
| 2400 | 0,32 | 0,39 | 0,47 | 0,57 | 0,69 | 0,84 | 0,68 |
| 2425 | 0,32 | 0,39 | 0,47 | 0,57 | 0,69 | 0,84 | 0,68 |
| 2450 | 0,32 | 0,39 | 0,47 | 0,57 | 0,69 | 0,84 | 0,68 |
| 2475 | 0,32 | 0,39 | 0,47 | 0,57 | 0,69 | 0,83 | 0,68 |
| 2500 | 0,32 | 0,39 | 0,47 | 0,57 | 0,69 | 0,83 | 0,67 |
| 2525 | 0,32 | 0,39 | 0,47 | 0,57 | 0,69 | 0,83 | 0,67 |
| 2550 | 0,32 | 0,39 | 0,47 | 0,57 | 0,69 | 0,83 | 0,67 |
| 2575 | 0,32 | 0,39 | 0,47 | 0,57 | 0,68 | 0,83 | 0,67 |
| 2600 | 0,32 | 0,39 | 0,47 | 0,56 | 0,68 | 0,83 | 0,67 |
| 2625 | 0,32 | 0,39 | 0,47 | 0,56 | 0,68 | 0,82 | 0,67 |
| 2650 | 0,32 | 0,38 | 0,47 | 0,56 | 0,68 | 0,82 | 0,67 |
| 2675 | 0,32 | 0,38 | 0,46 | 0,56 | 0,68 | 0,82 | 0,67 |
| 2700 | 0,32 | 0,38 | 0,46 | 0,56 | 0,68 | 0,82 | 0,66 |
| 2725 | 0,32 | 0,38 | 0,46 | 0,56 | 0,68 | 0,82 | 0,66 |
| 2750 | 0,32 | 0,38 | 0,46 | 0,56 | 0,68 | 0,82 | 0,66 |
| 2775 | 0,32 | 0,38 | 0,46 | 0,56 | 0,67 | 0,82 | 0,66 |
| 2800 | 0,31 | 0,38 | 0,46 | 0,56 | 0,67 | 0,81 | 0,66 |
| 2825 | 0,31 | 0,38 | 0,46 | 0,56 | 0,67 | 0,81 | 0,66 |
| 2850 | 0,31 | 0,38 | 0,46 | 0,55 | 0,67 | 0,81 | 0,66 |
| 2875 | 0,31 | 0,38 | 0,46 | 0,55 | 0,67 | 0,81 | 0,66 |
| 2900 | 0,31 | 0,38 | 0,46 | 0,55 | 0,67 | 0,81 | 0,65 |
| 2925 | 0,31 | 0,38 | 0,46 | 0,55 | 0,67 | 0,81 | 0,65 |
| 2950 | 0,31 | 0,38 | 0,46 | 0,55 | 0,67 | 0,81 | 0,65 |
| 2975 | 0,31 | 0,38 | 0,45 | 0,55 | 0,66 | 0,80 | 0,65 |
| 3000 | 0,31 | 0,38 | 0,45 | 0,55 | 0,66 | 0,80 | 0,65 |

The table provides feeding ration values for water temperatures ranging from 6°C to 18°C. For temperatures below 6°C, fish metabolism slows significantly, reducing feed intake, while for temperatures above 18°C, feeding rates may vary depending on species-specific metabolic adaptations, with potential adjustments required to prevent overfeeding and maintain water quality.

In one embodiment, the system determines the amount of feed dispensed based on calculated actuation times and screw rotations. In another embodiment, a feed measurement sensor (e.g., a load cell, optical counter, or acoustic detector) is positioned to detect the actual amount of feed dispensed. The controller 30 continuously monitors the feed output and closes the feed flow control gate 6 once the calculated ration (F) has been dispensed.

The disclosed fish feeder and fish feeding system provide precise and adjustable feed flow control, ensuring efficient and consistent feed dispensing while minimizing waste and preventing feed accumulation. The integration of a feed flow control gate and a feeding screw mechanism allows for regulated feed transport, preventing uncontrolled surges and blockages. The system enhances feeding accuracy by dynamically adjusting feed dispensing parameters, taking into account fish biomass, water temperature, and real-time feeding conditions. By incorporating sensor-based monitoring and automated adjustments, the invention optimizes feed utilization, reduces labor-intensive manual adjustments, and improves overall aquaculture productivity. The feeder's modular design and optional wireless or wired communication capabilities enable scalability and remote operation, making it suitable for both small-scale and industrial fish farming applications. The system ultimately contributes to cost savings, improved fish growth rates, and better environmental sustainability by reducing excess feed discharge and maintaining optimal feeding conditions.

### References

[1] CN206835957U.
[2] TWI604787B.

## Claims

1. A fish feeder (1), comprising: a feeder housing (2), having a fish feeder outlet (3); a feed container (4), having a feed container outlet (5); a feed flow control gate (6); a feed flow control gate actuation mechanism (7); a feed channel (8); a feeding screw (9) configured to rotate about a vertical central axis and convey feed granules through the feed channel (8) when rotated; and a feeding screw actuation mechanism (10); wherein the feeder housing (2) forms the feed container (4) and the feed channel (8) as internally separated sections, the feed container (4) defining a storage volume for feed granules, upstream of the feeding screw (9); the feed channel (8) extends below the feed container (4), accommodating the feeding screw (9); the feed container outlet (5) being positioned at the interface (11) between the feed container (4) and the feed channel (8), allowing controlled feed transfer into the feed channel (8), with feed flow being regulated by the feed flow control gate (6); the feed flow control gate (6), positioned at the feed container outlet (5), being movably adjustable to selectively regulate the amount of feed entering the feed channel (8); the feed flow control gate actuation mechanism (7) is operatively coupled to the feed flow control gate (6) and configured to adjust the feed flow control gate (6) position to regulate feed flow; the feeding screw actuation mechanism (10), operatively coupled to the feeding screw (9), being configured to rotate the feeding screw (9) to transport feed through the feed channel (8) toward the fish feeder outlet (3); the fish feeder outlet (3), positioned at a lower section of the feeder housing (2) and configured to discharge the transported feed granules; wherein the feeding screw (9) comprises a cylindrical central body (90) and a circular base part (91), the base part (91) having an upper surface inclined or curved downwardly towards its periphery at an angle between 3° and 7° to facilitate radial outward movement of feed granules; wherein the cylindrical central body (90) designed to support at least two substantially rectangular side blades (92), each side blade (92) comprising a top portion (93) having a single-sloped or double-sloped profile, configured to prevent accumulation and promote downward displacement of feed granules; wherein a conically shaped intermediate portion (94) is positioned above the cylindrical central body (90), supporting a projecting top blade (95), the top blade (95) having a top portion (93) with a single-sloped or double-sloped profile configured to agitate feed granules, facilitate even distribution, and enhance feed flow towards the inclined base part (91).

2. The fish feeder (1) of claim 1, wherein the interface (11) between the feed container (4) and the feed channel (8) comprises a conical transition portion (11a), tapering downward to direct feed granules toward the feed container outlet (5), ensuring feed granules flow into the feed channel (8).

3. The fish feeder (1) of any preceding claims, wherein the feed flow control gate (6) is a sliding gate, configured to move in a linear direction to regulate the amount of feed entering the feed channel (8).

4. The fish feeder (1) of any preceding claims, wherein the side blades (92) extend radially outward from the cylindrical central body (90) toward, but not reaching, the periphery of the inclined base part (91).

5. The fish feeder (1) of claim 4, wherein the feeder (1) further comprises an upper feed sub-channel (8a), positioned below the feed container outlet (5) and selectively closable from the feed container outlet (5) by the feed flow control gate (6); wherein the cylindrical central body (90) and side blades (92) of the feeding screw (9) are partially accommodated within an upper feed sub-channel (8a), such that rotation of the feeding screw (9) directs feed particles from the upper feed sub-channel (8a) radially outward toward the periphery of the feeding screw (9).

6. The fish feeder (1) of any preceding claims, wherein the feeder housing (2) is made of a transparent material.

7. A fish feeding system, comprising the fish feeder according to claims 1-6; a set of sensors (20), configured to measure parameters relevant to fish feeding; a controller (30), operatively connected to the set of sensors (20), the feed flow control gate actuation mechanism (7), and the feeding screw actuation mechanism (10); wherein the controller (30) comprising a processing unit (31) with stored instructions, wherein the instructions, when executed, cause the controller (30) to: receive data from the set of sensors (20); calculate feeding parameters; and generate a control signal for the actuation of the feeding screw actuation mechanism (10) and the feed flow control gate actuation mechanism (7) to operate the feeding screw (9) and the feed flow control gate (6) in accordance with the calculated feeding parameters.

8. The fish feeding system of claim 7, wherein the feeding parameters include the actuation time of the feeding screw actuation mechanism (10) and the feed flow control gate actuation mechanism (7) to operate the feeding screw (9) and the feed flow control gate (6).

9. The fish feeding system of claim 8, wherein the feeding parameters further include the rotational speed of the feeding screw (9).

10. The fish feeding system of claim 7, wherein the set of sensors (20) comprises a temperature sensor (21), configured to measure the ambient water temperature in which the fish feeder (1) is located; and a fish measurement sensor (22), configured to estimate the individual weight of fish based on biometric data, size measurements, or volumetric analysis; wherein the instructions stored with the processing unit (31), when executed, cause the controller (30) to: receive data from the temperature sensor (21) and the fish measurement sensor (22); calculate the feeding parameters, including the required feed ration based on water temperature, estimated individual fish weight, and empirically determined coefficients; and generate the control signal for the actuation of the feeding screw actuation mechanism (10) and the feed flow control gate actuation mechanism (7) to operate the feeding screw (9) and the feed flow control gate (6) in accordance with the calculated feeding parameters.

11. The fish feeding system of claim 10, wherein the instructions stored with the processing unit (31), when executed, cause the controller (30) to calculate the required feed ration (F) using the formula: *F=a×W^{b}×T^{c},* where: F is the daily feed ration, expressed in a unit of mass per fish per unit of time; *W* is the estimated individual fish weight, expressed in a unit of mass, determined based on data from the fish measurement sensor (22); T is the ambient water temperature, measured by the temperature sensor (21); a, b, and c are coefficients stored in a feeding table, the feeding table being accessible by the controller (30) and containing empirically determined values set forth in Table 1 of the description.
